Europäisches Patentamt

European Patent Office

Office européen des brevets

(11) Publication number: **0 227 170**
**A1**

## (12) EUROPEAN PATENT APPLICATION

(21) Application number: 86202217.5

(22) Date of filing: 09.12.86

(51) Int. Cl.⁴ **B67D 1/14** , F16K 11/074

(30) Priority: 20.12.85 NL 8503535

(43) Date of publication of application:
01.07.87 Bulletin 87/27

㠗 Designated Contracting States:
AT BE CH DE ES FR GB GR IT LI LU NL SE

(71) Applicant: GAYLIENE INVESTMENTS LTD.
One Dunraven Street
London, W1Y 3FG(GB)

(72) Inventor: Van Arkel, Adrianus Pieter
Savelsbos 322
NL- 2716 HS Zoetermeer(NL)

(74) Representative: Timmers, Cornelis Herman
Johannes et al
EXTERPATENT Willem Witsenplein 4
NL-2596 BK 's-Gravenhage(NL)

(54) Valve controlling the flow of a fluid, particularly beer.

㉗ Valve controlling the flow of a fluid, particularly beer, comprising a disc-like rotor (8) with a connecting duct (15) leading into its end faces (8a, 8b), and received with a close fit between the mutually facing end faces (6a, 9a) of two stationary end parts (6, 9) one (6) being provided with a fluid inlet duct and the other (9) being provided with a outlet duct in which in the rotor (8) a second connecting duct (20) is provided which extends between its end faces (8a, 8b) and which in the closed position of the valve establishes communication between the outlet (18) and an airvent duct (21).

FIG.1.

EP 0 227 170 A1

## Valve controlling the flow of a fluid, particularly beer.

The invention relates to a valve controlling the flow of a fluid, particularly beer comprising a disc-like rotor, which is enclosed in a casing, is rotatable about an axis, and has end faces lying at right angles to the axis, and at least one connecting duct leading out into said end faces, said rotor being received with a close fit between the mutually facing endfaces of two stationary end parts, one of which is provided with a fluid inlet duct leading out into the endface, while the other is provided with a fluid outlet duct leading out into the end face, said ducts being in communication with one another by way of the connecting duct in a determined position of the rotor. A valve of this kind is known from the French Patent Spec. 1.145.930. This known valve has the drawback that, when switching off the valve, rests of fluid can remain in the outlet, which only, slowly drip out. This is particularly unwanted when the valve is used for drawing a perishable fluid such as beer, because, when the valve is not cleaned directly after the last operation thereof and left inoperative for some time, bacterial infection may occur.

The invention aims particularly to obviate this drawback and to provide a valve suitable for drawing beer in dispensing machines.

According to the invention this is achieved in that in the rotor a second connecting duct is provided which extends between its end faces and which in the closed position of the valve establishes communication between the outlet and an airvent duct.

By this measure the outlet of the valve is vented to the atmosphere in the closed position so that any fluid still present therein can flow out of it quickly and unhindered.

Preferably the rotor is coupled via an operating shaft extending in its axis not only to a motor-driven operating member disposed on the inlet side but also to a hand operating member disposed on the outlet side. This makes the valve suitable for both automatical and hand-operated installations.

A simple structure which also results into a perfect seating of the various parts is obtained by the use of a sleeve which surrounds the operating shaft part passing through the inlet part and which acts via a convergent annular end part on a divergent annular pressure surface formed around the shaft on the inlet part and, at the other end, is acted on by one or more springs, particularly cupped spring washers, bearing against a flange connected to the casing.

The invention will now be explained with reference to the drawing.

Figure 1 is a longitudinal section through the valve according to the invention, constructed in the form of a beer tap.

Figure 2 is a longitudinal section through the disc-like rotor at the site of the airvent provided in it.

Figure 3 is an end view of the rotor.

The construction of the valve shown in the drawings and given the general reference 1 comprises a substantially cylindrical casing 2 having a closed front end 3 and an open flange-like rear end 4. Viewed from the open flange end 4 the cylindrical bore 5 of the valve contains in succession a first end part 6, a disc-like rotor 8 adapted to rotate about the axis 7, and a second end part 9. The rotor 8 is received with a close fit with its machined end faces 8a, 8b between, respectively, the end face 6a of the one end part 6 and the end face 9a of the end part 9, which are likewise at right angles to the axis 7.

The end part 6 is secured against rotation and fastened by means of the retaining pin 10 to the flange 12, which is fixed by means of the threaded bolt 11 to the flange 4; the end part 9 is fastened to the casing end 3 by means of the retaining pin 13.

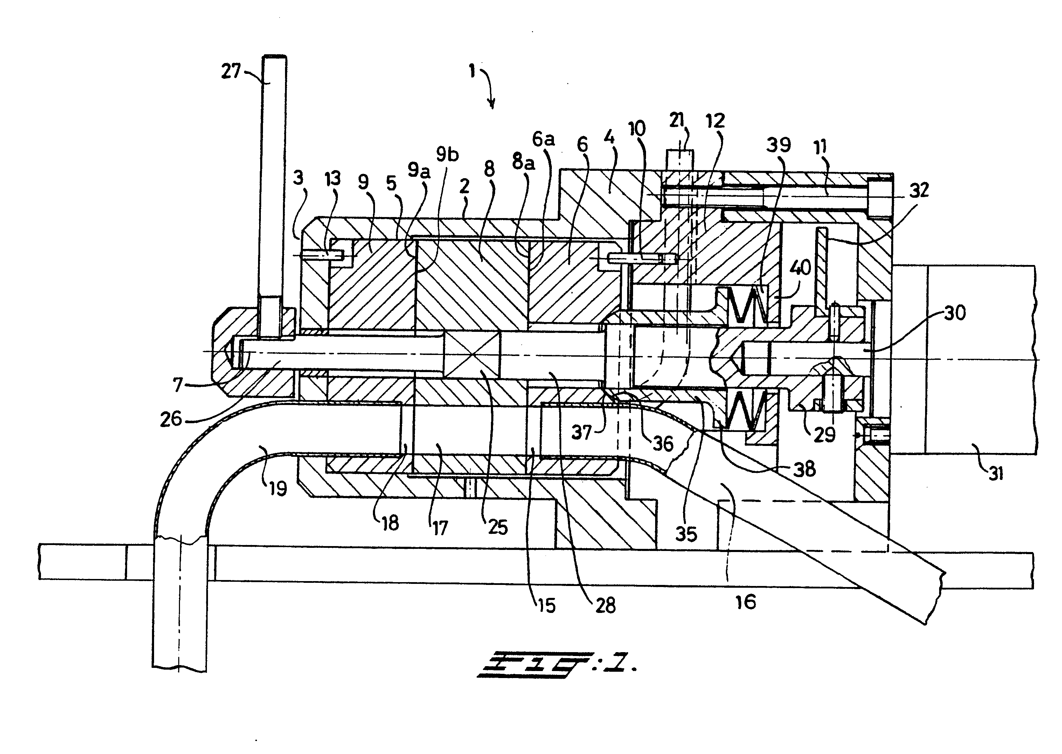

In the end part 6 a bore 15 is formed, whose axis is parallel to the axis 7, and which merges without discontinuity into the beer supply pipe 16. In the rotor 8 a bore 17 is formed whose axis is likewise parallel to the axis 7 and whose diameter is equal to that of the bore 15, while in the end part 9 a bore 18 is formed, which merges without discontinuity into the beer outlet 19. In the open position of the valve, as shown in figure 1, a continuous connection is made between the beer inlet 16 and the outlet 19.

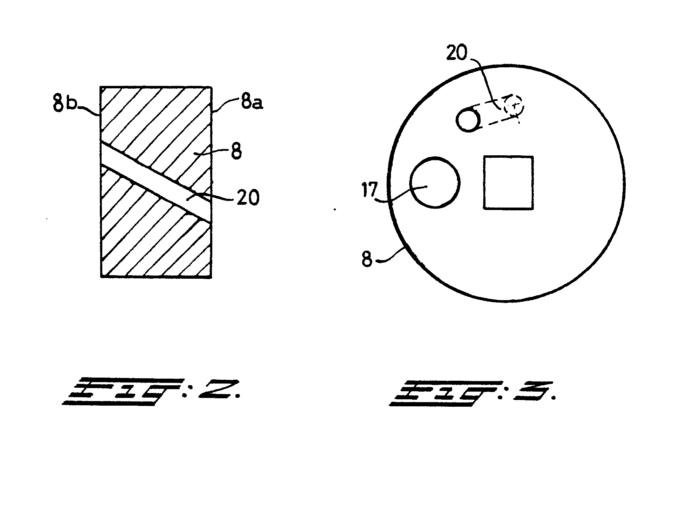

According to the invention, as can be seen in figures 2 and 3, a second duct 20 is formed in the rotor 8, extending obliquely between the end faces 8a and 8b and, when the valve is in the closed position, establishing communication between the beer outlet 18 and a vent duct 21, which is partly shown in figure 1 and which leads out into the end face 6a. Not only is the dripping out of beer thereby prevented when the valve is in the closed position, but in addition particularly effective cleaning is thus made possible.

The rotary movement of the rotor 8 about the axis 7 is achieved with the aid of an operating shaft 25, the front end 26 of which passes out through the casing end 3 and is connected to an operating handle 27. The rear end 28 is connected to an intermediate member 29 fastened on the shaft 30 of the drive motor 31. The member 32 fastened on the intermediate member 29 forms part of an automatic control means for the motor 31, this means not being part of the invention.

In the embodiment described the close contact between the respective end parts 6 and 9 and the rotor disposed between them is achieved through the resilient pressing of the end part 6 in the direction of the end part 9. For this purpose a sleeve 35 having a tapering end surface 36 is disposed on the shaft end 28 and acts on a divergent annular surface 37 on the end part 6; at the other end the sleeve 35 is provided with a flange 38 which is pressed in the direction of the casing end 3 by springs, for example cupped spring washers 39, disposed between the flange 38 and the end flange 40 of the flange 12. This method of applying pressure overcomes any defects of plane-parallelism between the cooperating end faces of the end parts 6 and 9 in relation to the rotor 8.

**Claims**

1. Valve controlling the flow of a fluid, particularly beer, comprising a disc-like rotor (8) which is enclosed in a casing (2), is rotatable about an axis (7), and has end faces (8a, 8b) lying at right angels to the axis (7) and at least one connecting duct - (15) leading out into said end faces, said rotor being received with a close fit between the mutually facing end faces (6a, 9a) of two stationary end parts (6, 9) one (6) of which is provided with a fluid inlet duct (15) leading out into the end face, while the other (9) is provided with a fluid outlet duct - (18) leading out into the end face, said ducts being in communication with one another by way of the connecting duct (15) in a determined position of the rotor (8), characterized in that in the rotor (8) a second connecting duct (20) is provided which extends between its end faces (8a, 8b) and which in the closed position of the valve establishes communication between the outlet (18) and an airvent duct (21).

2. Valve according to Claim 1, characterized in that the rotor (8) is coupled via an operating shaft - (25) extending in its axis not only to a motor-driven operating member (32) disposed on the inlet side but also to a hand operating member (27) disposed on the outlet side.

3. Valve according to Claim 2, characterized by a sleeve (35) which surrounds the operating shaft - (25) part passing through the inlet part and which acts via a convergent annular end part (36) on a divergent annular pressure surface (37) formed around the shaft on the inlet part and, at the other end, is acted on by one or more springs (39) particularly cupped spring washers, bearing against a flange (38) connected to the casing.

27 1 6a 6 4 10 21 12 39 11

3 13 9 5 9a 9b 2 8 8a 32

7 40 30

26 29 31

19 37 36 38

18 17 25 35

15 28 16

FIG:1.

0 227 170

8b — 8a

8

20

_FIG. 2._

20

17

8

_FIG. 3._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | FR-A-1 145 930 (SALOMON) | | B 67 D 1/14 <br> F 16 K 11/074 |
| | --- | | |
| A | US-A-3 590 872 (BAITY) | | |
| | --- | | |
| A | BE-A- 900 787 (MOLINET) | | |
| | ----- | | |

**TECHNICAL FIELDS SEARCHED (Int. Cl.4)**

B 67 D
F 16 K

The present search report has been drawn up for all claims

| Place of search | Date of completion of the search | Examiner |
|---|---|---|
| THE HAGUE | 12-04-1987 | VERELST P.E.J. |